# NEUE EUROPÄISCHE PATENTSCHRIFT

(11) **EP 1 803 837 B2**
(45) Veröffentlichungstag und Bekanntmachung des Hinweises auf die Entscheidung über den Einspruch: **23.10.2024**
(45) Hinweis auf die Patenterteilung: 12.09.2018
(21) Anmeldenummer: 05025726.0
(22) Anmeldetag: 25.11.2005
(51) Int. Cl.: C23C 18/16, C25D 21/22, B01J 47/02

(54) **Verfahren zur Reinigung von Prozesslösungen**
Process for cleaning of processing solutions
Procédé pour le nettoyage de solutions de traitement

(43) Veröffentlichungstag der Anmeldung: 04.07.2007
(73) Patentinhaber: MacDermid Enthone Inc., Waterbury, CT 06702 (US)
(72) Erfinder: Werner, Christoph Dr., 40597 Düsseldorf (DE); Fuhrmann, Axel Dr., 41464 Neuss (DE); Möbius, Andreas Prof. Dr., 41564 Kaarst (DE)
(74) Vertreter: Novagraaf Group

(56) Entgegenhaltungen:
- DD-A1- 280 560
- DE-A1- 4 031 526
- DE-A1- 4 328 876
- DE-C2- 4 031 526
- US-A- 3 663 403
- US-A- 5 885 462
- US-A1- 2002 153 254
- ANDREAS MÖBIUS, CHRISTOPH WERNER, AXEL KÖNIG: "Möglichkeiten der Prozessbadregenerierungvertieft am Beispiel von Nickelelektrolyten", GALVANOTECHNIK, vol. 9, September 2005 (2005-09-01), pages 2054 - 2062, XP002378238
- PATENT ABSTRACTS OF JAPAN vol. 009, no. 066 (C - 271) 26 March 1985 (1985-03-26)
- "Abwasser- und Recyclingtechnik in der Metallindustrie", METALLOBERFLÄCHE 33, vol. 5, 1979, pages 185 - 189
- G. KÜHNE: "Ionenaustauscher - aktivierte Kunstharze für Austauschreaktionen, Adsorption und Katalyse", CHEMIKER ZEITUNG, vol. 96, no. 5, 1972, pages 239 - 247
- K. FISCHWASSER ET AL.: "Beitrag zur wertstoffgewinnung aus industrieabwässernmit ionenaustauschern", ACTA HYDROCHIM. ET. HYDROBIOL., vol. 12, no. 2, 1984, pages 183 - 202

## Beschreibung

Die vorliegende Erfindung betrifft ein Verfahren zur Reinigung einer in der Oberflächentechnik einsetzbaren Prozeßlösung, insbesondere eines Elektrolyten zur galvanischen oder autokatalytischen Abscheidung einer Metall- oder Metalllegierungsschicht auf einem Substrat, welche dazu geeignet sind, organische und anorganische Störstoffe aus der Prozeßlösung zumindest teilweise zu entfernen, und somit die Nutzungsdauer der Prozeßlösung zu erhöhen.

Prozeßbäder in der Oberflächentechnik unterliegen einer Veränderung durch den beabsichtigten Stoffumsatz, das Einschleppen von Wasser und Verunreinigungen, das Ausschleppen von Elektrolyt und anderen Einflüssen wie Verdunstung, anodische oder katodische Nebenreaktion, Aufnahme von Komponenten aus der Luft bis hin zu Fehldosierungen. Dies führt dazu, daß kontinuierlich oder in bestimmten Abständen eine Regeneration der eingesetzten Prozeßlösungen vorgenommen werden muß, wenn ein Neuansatz und die damit verbundene Entsorgung der Altprozeßlösung umgangen werden sollen. Aus dem Stand der Technik sind unterschiedlichste Verfahren zur Entfernung einzelner Störstoffe aus Prozeßlösungen, insbesondere aus Elektrolyten bekannt. Hier sind insbesondere Filtrations-, Oxidations-, Extraktion-, sowie Dialyseverfahren zu nennen.

Die genannten Verfahren unterteilen sich jeweils in verschiedene Unterverfahren. So ist es bekannt, zur Entfernung von Partikeln wie Metallflitter, Staubteilchen, Koloide, Mikroorganismen, Anodenschlamm usw. die Prozeßlösungen zu filtrieren. Hierzu werden die Prozeßlösungen mittels geeigneter Filter, gegebenenfalls unter Zuhilfenahme von Filtrierhilfsstoffen wie Celite oder Aktivkohle filtriert, um die Störpartikel aus der Prozeßlösung zu entfernen. Nachteilig bei diesem Verfahren ist, daß sich im Laufe der Filtration auf dem Filter ein Filterkuchen bildet, der zu einem Anstieg des Strömungswiderstandes vor dem Filter bis letztendlich zu einer Verstopfung des Filters führen kann. Mittels hohem apparativem Aufwand, z. B. durch den Einsatz von Bandfiltern ist es möglich, den Strömungswiderstand der Filtereinrichtung auf einem gleichbleibenden Wert zu halten.

Die mitder Filtration entfernbaren Störstoffe sind abhängig von der Ausgestaltung des Filters hinsichtlich Porengröße und der Wahl entsprechender Filtrierhilfsstoffe.

Eine Ausgestaltungsform der Filtration ist die Mikro- oder Ultrafiltration mit geeigneten Membranfiltern. Die hierbei eingesetzten Membranfilter weisen sehr kleine Porengrößen mit einem hohen Rückhaltevermögen auf, führen jedoch nachteiligerweise zu einem hohen Strömungswiderstand. Vorwiegend wird die Mikro- oder Ultrafiltration für Entfettungsbäder oder saure oder alkalische Beizbäder eingesetzt.

Den Filtrationsverfahren gemein ist, daß in den Prozeßlösungen vollständig gelöste Störstoffe mit dieser Technik nicht aus den Prozeßlösungen entfernt werden können.

Viele in der Oberflächentechnik eingesetzte Prozeßlösungen weisen jedoch organische Bestandteile auf, die im Laufe des Behandlungsprozesses abgebaut werden und letztendlich die Prozeßchemie störende Abbauprodukte bilden. Vielfach sind diese störenden Abbauprodukte vollständig in der Prozeßlösung löslich und lassen sich mit Filtrationsverfahren nicht erfassen.

Ein Verfahren zu Entfernung dieser organischen Abbauprodukte ist die Oxidation der Abbauprodukte mit beispielsweise UV-H₂O₂-Oxidation.

Hierbei behandelt man zumindest Teilvolumina eines Prozeßbades, z. B. eines Glanznickelelektrolyten, mit UV/H₂O₂. Die organischen Bestandteile des Elektrolyten werden diskontinuierlich außerhalb des Bades oxidiert. Alle organische Verbindungen, Abbauprodukte und auch die wirksamen Glanzbildner und Netzmittel werden aufoxidiert. Als Endprodukt einer solchen Behandlung erhält man im Falle eines Glanznickelelektrolyten einen Watt'schen Grundansatz, der dem Prozeßbad wieder zugemischt werden kann. Die wirksamen Additive wie Glanzbildner und Netzmittel, die gleichfalls im Zuge der UV/H₂O₂-Oxidation aufoxidiert wurden, müssen entsprechend nachdosiert werden. Neben diesem Nachteil ist die UV/H₂O₂-Oxidation nicht geeignet, anorganische Störstoffe wie beispielsweise Fremdionen aus den Prozeßlösungen zu entfernen.

Eine weitere Möglichkeit der Prozeßlösungsreinigung bietet die Flüssig/Flüssig-Extraktion mit geeigneten flüssigen Extraktionsmitteln. Hierbei werden mit Hilfe eines flüssigen Extraktionsmittels Verunreinigungen aus der Trägerflüssigkeit, z. B. einem zu reinigenden galvanischen Elektrolyten, entfernt. Der dabei stattfindende Stofftransport von einem Fluid in das andere resultiert aus den unterschiedlichen Löslichkeiten des Stoffes in den Fluiden und dem herrschenden Konzentrationsgefälle.

Extraktionsmittel und Trägerflüssigkeit sollten dabei möglichst unlöslich ineinander sein, um eine gute Trennung zu gewährleisten und gleichzeitig möglichst wenig Lösungsmittel zu verschleppen. In der Praxis ist eine der beiden Phasen wässrig, die andere ein organisches Solvenz bzw. eine Lösung von Extraktionsmitteln in einem organischen Solvenz.

Da es sich bei der Extraktion um eine Verteilung zwischen zwei nicht mischbaren Phasen handelt, erfolgt der Austausch und die Gleichgewichtseinstellung über die Phasengrenze. Eine große Phasengrenzfläche beschleunigt die Gleichgewichtseinstellung. Großtechnisch werden deshalb Extraktionsanwendungen nach dem Mixer-Settler-Prinzip realisiert. Hierbei werden in einer ersten Kammer Extraktionsmittel und beladene Trägerflüssigkeit (Elektrolyt) miteinander vermischt (Mixer). Über ein Wehr gelangt das Gemisch in den sogenannten Settler, der Absetzkammer. Hier können sich die Phasen wieder trennen. Die getrennten Phasen werden dann separat aus der Kammer entfernt. Entspricht das Extraktionsergebnis noch nicht den Anforderungen, können mehrere Mixer-Settler-Einheiten hintereinander geschaltet werden.

Voraussetzung für eine erfolgreiche Anwendung der Flüssig/Flüssig-Extraktion ist, daß ein Lösungsmittel gefunden wird, welches die zu entfernende Verunreinigung selektiv löst, sich gut wieder abtrennen läßt und die geringen im Elektrolyten verbleibender Restmengen das Anwendungsziel der Prozeßlösung nicht stören..

Eine Ausgestaltungsform der Flüssig/Flüssig-Extraktion ist die membrangestützte Extraktion mit Hilfe von Hohlfasermodulen. Hierbei werden das organische Extraktionsmittel und die Trägerflüssigkeit (Elektrolyt) durch eine poröse Membran getrennt. Im Fall einer mikroporösen hydrophoben Membran wird die organische Phase die Membran spontan benetzen und versuchen, durch die Poren auf die andere Seite der Membran zu gelangen. Dieser Durchbruch kann durch einen leichten Überdruck auf der Trägerflüssigkeitsseite vermieden werden. Die Schnittstelle zwischen wässriger und organischer Phase kann so im Porenmund immobilisiert werden. Treibende Kraft für den Stoffaustausch ist auch hier der Konzentrationsgradient. Die Flüssigkeiten werden an den beiden Seiten der Membran vorbei geleitet. Die Fließgeschwindigkeit von beiden Phasen kann dabei über einen weiten Bereich variiert werden. Vorteilhafterweise können mit der hohlfasergestützten Membran-Flüssig/Flüssig-Extraktion auch Systeme mit Tendenz zur Emulsionsbildung behandelt werden. Darüber hinaus benötigt eine entsprechende Vorrichtung zur hohlfasermodulgestützten Flüssig/Flüssig-Extraktion im Vergleich zur Extraktion nach dem Mixer-Settler-Prinzip deutlich weniger bewegte Teile.

Den Flüssig/Flüssig-Extraktionsverfahren ist gemeinsam, daß sie auf entsprechende nichtmischbare Extraktions-/Trägerflüssigkeitssysteme begrenzt sind und sich mit Hilfe der Flüssig/Flüssig-Extraktion in der Regel keine anorganischen Störstoffe wie beispielsweise Fremdionen aus den Prozeßlösungen entfernen lassen.

Eine weitere aus dem Stand der Technik bekannte Methode zur Reinigung von Prozeßlösungen sind die Dialyseverfahren wie Diffusionsdialyse oder Elektrodialyse. Bei der ionenselektiven Dialyse wird wie bei der Extraktion ein Konzentrationsgradient für den Stofftransport zwischen den Phasen genutzt, allerdings unter Verwendung von hydraulisch dichten lonenaustauschmembranen.

Das Herz einer solchen Anlage besteht aus den Membranen, die nach Art einer Filterpresse zusammengehalten werden. Von den anionselektiven Membranen werden theoretisch alle Kationen zurückgehalten, außer den Wasserstoffenionen, die wegen ihrer kleinen Größe und hohen Mobilität die Membran trotzdem durchwandern. Die Anionen und die Hydroniumionen diffundieren gleichzeitig. Nur stark dissoziierende Säuren bieten deshalb gute Voraussetzungen für eine Anwendung.

Die zu reinigende Prozeßlösung und die einzusetzende Dialyselösung, beispielsweise Wasser, durchströmen den Membranstapel in der Regel im Gegenstromprinzip. Die beiden Flüssigkeiten sind durch Membranen und Rahmen, die die Verteilung in alternierender Form ermöglichen, voneinander getrennt.

Neben den anionenselektiven Membranen können auch kationenselektive Membranen oder Kombinationen aus anionen- und kationenselektiven Membranen eingesetzt werden.

Eine Ausgestaltungsform der Dialyse ist die Elektrodialyse, welche einen elektrochemischen Prozeß darstellt, bei dem mit Ionenaustauschermembranen und der treibenden Kraft eines elektrischen Feldes ionische Bestandteile aus einer Lösung entfernt bzw. ausgetauscht und gegebenenfalls konzentriert werden.

Hierbei kann das angelegte elektrische Feld den Stofftransport in Richtung des Konzentrationsgefälles verstärken oder auch umkehren.

Elektrodialysevorrichtungen sind geeignet, auch in den Prozeßlösungen gelöste Ionen selektiv abzutrennen. Nachteiligerweise sind die eingesetzten Membranen empfindlich und, insbesondere im Fall der Elektrodialyse, das Verfahren mit einem hohen Energieaufwand verbunden.

Neben den bereits beschriebenen Verfahren ist es aus der DE 43 28 876 A1 sowie der DE 43 18 793 A1 bekannt, ein Adsorberpolymer zur Eliminierung von organischen Störstoffen einzusetzen. Hierbei werden die organischen Störstoffe zumindest teilweise an der Oberfläche von Adsorberpolymeren adsorbiert und so der Prozeßlösung entzogen. Vorteilhafterweise kann ein solches Verfahren kontinuierlich durchgeführt werden und das eingesetzte Adsorberpolymer mit geeigneten Lösungen, beispielsweise mit einer wasserstoffperoxidhaltigen Oxidationslösung regeneriert werden.

DE 43 28 876 A1 offenbart ein Verfahren zur Verlängerung der Nutzungsdauer von Elektrolytlösungen durch Eliminierung von organischen Störstoffen mit Hilfe von regenerierbaren Adsorberpolymeren. Es werden dabei Elektrolytlösungen behandelt, die z. B. bei der galvanischen Abscheidung von Metallüberzügen und -Schichten zur Anwendung kommen und in denen sich in Folge von Reaktionen die organischen Badbestandteile in ungewünschte Begleitstoffe umgesetzt haben. Ziel der Erfindung ist die kostengünstige Eliminierung der organischen Störstoffe mit Hilfe von regenerierbaren Adsorbenzien, vornehmlich mit Adsorberpolymeren, wobei keine oder nur minimale Elektrolytverluste auftreten und die Regenerierung der Adsorbenzien mit anorganischen Säuren oder Laugen erfolgt. Dabei wird die vollständige Desorption der Adsorptivgemische durch eine oxidative Vorbehandlung der beladenen Adsorbenzien und die sich anschließenden Regenerierschritte erreicht.

Weitere Verfahren und Vorrichtungen zur Reinigung von Prozessflüssigkeiten werden in US 5 885 462 A, US 3 663 403 A, DE 40 31 526 A1 oder JP 59197555 A beschrieben.

US 2002/153254 offenbart ein System und ein Verfahren zum selektiven Entfernen von einem oder mehreren organischen und anorganischen und auch vorzugsweise einem oder mehreren anorganischen Verunreinigungen aus Beschichtungsbädern bereit. Insbesondere betrifft dieses Dokument die Verwendung einer Energiequelle in Kombination mit chemischen Oxidationsmitteln, allein oder in Verbindung mit einem Katalysator, um organische Verunreinigungen in dem Plattierungsbad auf ein Niveau zu oxidieren, so dass das Elektroplattierungsbad wiedergewonnen und wiederverwendet werden kann geeignete chemische Einstellung. Das oxidative Behandlungsverfahren kann ein kontinuierlicher Prozess oder ein diskontinuierlicher Prozess sein, der in einem einzigen Durchgang durchgeführt wird. Restliche organische Stoffe, falls gewünscht, und Chloridionen im Bad werden durch eine Chemisorptions- oder Physisorptionsbehandlung aus der Lösung entfernt. Anorganische Verunreinigungen werden aus dem Elektroplattierungsbad durch selektive Ionenaustauschharze oder Elektrodialyse entfernt, während teilchenförmige und suspendierte kolloidale Teilchen durch Filtration entfernt werden, bevor das behandelte Plattierungsbad recycelt wird.

Andreas Möbius et al. offenbaren in "Möglichkeiten der Prozessbadregenerierung vertieft am Beispiel von Nickelelektrolyten" in GALVANOTECHNIK, Bd. 9, September 2005, Seiten 2054-2062, dass Prozessbäder in der Oberflächentechnik einer Veränderung durch den beabsichtigten Stoffumsatz, Einschleppen von Wasser und Verunreinigungen, Ausschleppen von Elektrolyt und anderen Einflüssen wie Verdunstung unterliegen, anodische oder kathodische Nebenreaktionen, Aufnahme von Komponenten aus der Luft (z.B. Absorption von Kohlendioxid in alkalischen Elektrolyten, Staub, Mikroorganismen, bis hin zur Fehldosierung unterliegen. Das heißt, es muss kontinuierlich oder in bestimmten Abständen eine Regeneration des Elektrolyten vorgenommen werden, wenn man nicht mit Neuansatz und Entsorgung arbeiten will. Um dies zu vermeiden, werden viele verschiedene Verfahren angeboten. die die Sauberkeit des Elektrolyten verbessern sollen. In diesem Beitrag werden die Systeme beschrieben.

Ein Nachteil dieser Verfahren ist es jedoch, daß das Adsorberpolymer auf den jeweils zu entfernenden organischen Störstoff abgestimmt sein muß und nur diesen sehr selektiv entfernt. Darüber hinaus lassen sich mit Hilfe dieser Technik keine anorganischen Störstoffe, wie beispielsweise Fremdionen entfernen.

Es ist daher die Aufgabe der vorliegenden Erfindung, ein Verfahren anzugeben, welche geeignet sind, eine Mehrzahl von Störstoffen aus der zu reinigenden Prozeßlösung unter Überwindung der aus dem Stand der Technik bekannten Nachteile einfach und kostengünstig zu entfernen.

Gelöst wird diese Aufgabe hinsichtlich des Verfahrens durch ein Verfahren nach Anspruch 1. Dabei ist der Einsatz der Absorberpolymere nicht auf ein Bad begrenzt. Sie können auch an die Standspüle bzw. die konzentrierteste Spüle einer Spülkaskade angeschlossen werden und das gereinigte Spülwasser ggf. mit Aufkonzentration rückgeführt werden. Der Begriff Prozeßlösung umfaßt somit ein Bad oder Spüle.

Polymerharze im Sinne der Erfindung sind hierbei Adsorberharze und/oder lonenaustauscherharze, die geeignet sind organische und/oder anorganische Verunreingiungen aus der Prozeßlösung zumindest teilweise zu entfernen. Dies umfaßt organische Adsorberharze mit und ohne funktionelle Gruppen und/oder anorganische Adsorberpolymere wie Silcate, Alumosilicate, Bornitride und auch Zeolithe. Organische Adsorberpolymere können vernetzte Polyacrylate, Polystyrol, Polyacrylamid und Divinylbenzol/Styrol Copolymerisate sein.

Unter physiko-chemischen Eigenschaften der Polymerharze im Sinne der Erfindung sind insbesondere deren Adsorptionsvermögen, das lonenaustauschvermögen, die Korngröße oder Porengröße zu verstehen.

Die Prozeßlösung wird erfindungsgemäß mit den Polymerharzen in einzelnen, voneinander getrennten Aufnahmeeinrichtungen für die Polymerharze mit der Prozeßlösung in Kontakt gebracht. Vorteilhafterweise sind die einzelnen Aufnahmevorrichtung für die Polymerharze strömungstechnisch so miteinander verbunden, daß die zu reinigende Prozeßlösung nacheinander durch die Aufnahmeeinrichtungen geführt werden kann oder jeweils Teilströme der Prozeßlösung parallel durch die Aufnahmeeinrichtungen geführt werden können.

In einer weiteren Ausgestaltung des erfindungsgemäßen Verfahrens wird die Prozeßlösung wenigstens teilweise aus einem Prozeßbad in eine Adsorbervorrichtung überführt, wobei die Adsorbervorrichtung wenigstens drei Aufnahmeeinrichtungen zur Aufnahme von wenigstens zwei unterschiedlichen Polymerharzen aufweist, in der Weise, daß die Prozeßlösung nacheinander mit den in den Aufnahmeeinheiten befindlichen Polymerharzen in Kontakt gebracht wird, wobei die beiden ersten Aufnahmevorrichtungen Polymerharze aufnehmen, die geeignet sind, organische Verunreinigungen aus der Prozeßlösung zumindest teilweise zu adsorbieren und die letzte Aufnahmevorrichtung ein Ionenaustauscherharz aufnimmt, welches geeignet ist, anorganische Verunreinigungen zumindest teilweise aus der Prozeßlösung zu entfernen.

Bei einer solchen Ausgestaltung des erfindungsgemäßen Verfahrens kann wenigstens das Ionenaustauscherharz vorteilhafterweise vor der Kontaktierung mit der Prozeßlösung mit einer in der Prozeßlösung enthaltenen Substanz beladen werden, welche sich im Laufe des oberflächentechnischen Behandlungsprozesses zersetzt bzw. verbraucht wird und daher in der Prozeßlösung ergänzt werden muß, so daß bei der Kontaktierung der Prozeßlösung mit dem beladenen lonenaustauscherharz die Substanz an die Prozeßlösung abgegeben wird, mit der Maßgabe, daß die im oberflächentechnischen Behandlungsprozeß zersetzte bzw. verbrauchte Menge an Substanz wenigstens teilweise in der Prozeßlösung ergänzt wird.

Insbesondere eignet sich daß erfindungsgemäße Verfahren zur Reinigung von Elektrolyten zur galvanischen oder autokatalytischen Beschichtung einer Oberfläche mit einer Metallschicht.

Das im erfindungsgemäßen Verfahren einsetzbare Polymerharz ist vorteilhafterweise wenigstens ein Harz der Gruppe bestehend aus Divinylbenzol/Styrol-Copolymerisat.

Das im erfindungsgemäßen Verfahren eingesetzte Polymerharz kann mit einer oder mehreren Regenerationslösungen der Gruppe bestehend aus Wasser, einer alkalischen wässrigen Lösung, einer alkoholischen wässrigen Lösung, einer alkalischen alkoholischen Lösung, einer sauren Lösung oder einer sauren alkoholischen Lösung regeneriert werden.

Darüber hinaus kann die Regenerierlösung ein Oxidationsmittel oder ein Reduktionsmittel zur Regenerierung des Polymerharzes aufweisen.

Vorteilhafterweise weist wenigstens eine Regenerationslösung Wasserstoffperoxid als Oxidationsmittel auf.

Die Regenerationslösung kann das Oxidations- oder Reduktionsmittel in einer Konzentration zwischen ca. 0,1 und ca. 10 Gew.-%, bevorzugt zwischen 1 und 5 Gew.-%, noch bevorzugter zwischen 1,5 und 3 Gew.-% aufweisen.

Durch die Behandlung der mit organischen Störstoffen beladenen Polymerharze mit einer ein Oxidationsmittel enthaltenden Regenerationslösung werden die organischen Störstoffe aufoxidiert. Es hat sich herausgestellt, daß die aufoxidierten organischen Störstoffe von den eingesetzten Polymerharzen nicht wieder adsorbiert werden. Hierdurch kann die oxidationsmittelhaltige Lösung vorteilhaft mehrfach zur Regenerierung der Polymerharze eingesetzt werden, was einen weiteren ökonomischen und ökologischen Vorteil des erfindungsgemäßen Verfahrens darstellt.

Das im erfindungsgemäßen Verfahren einsetzbare lonenaustauscherharz kann nach der Regenerierung und vor der Kontaktierung mit der Prozeßlösung mit einer saccharinhaltigen Lösung in Kontakt gebracht werden, wobei das lonenaustauscherharz mit Saccharin beladen wird. Darüber hinaus können auch die Adsorberharze mit geeigneten beschichtungsaktiven Substanzen beladen werden.

Mittels des erfindungsgemäßen Verfahrens lassen sich Prozeßlösungen kontinuierlich reinigen. Darüber hinaus läßt sich das erfindungsgemäße Verfahren mit weiteren, aus dem Stand der Technik bekannten Verfahren zur Reinigung von Prozeßlösungen wie Filtration, Dialyse, Elektrodialyse, UV-H₂O₂, UV.H₂O₂-Oxidation, Extraktion, Kristallisation, Fällung kombinieren.

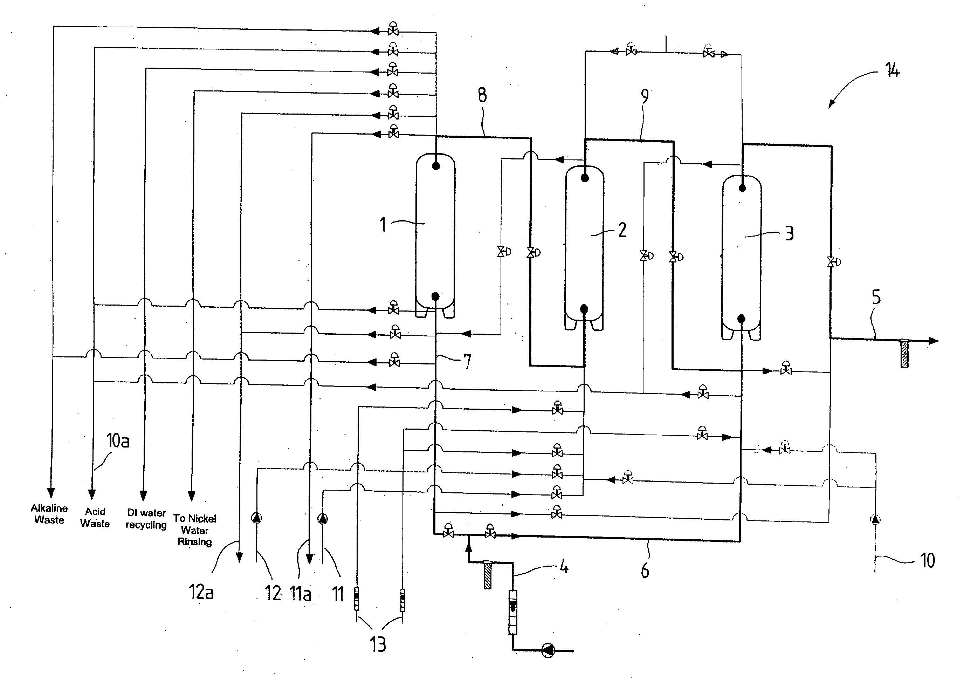

Fig. 1 zeigt eine Ausgestaltung einer Vorrichtung

In Fig. 1 wird eine Ausgestaltung einer gezeigt. Eine zu reinigende Prozeßlösung wird einem Prozeßbad entnommen und über einen Zulauf 4 der Vorrichtung 14 zur Behandlung der Prozeßlösung zugeführt. Die Vorrichtung 14 weist zwei Einrichtungen 1 und 2 zur Aufnahme eines Adsorberharzes und eine Einrichtung 3 zur Aufnahme eines Ionenaustauscherharzes auf. Der Zulauf 4 ist mit den Einrichtungen 1, 2 und 3 strömungstechnisch so verbunden, daß die dem Prozeßbad entnommene Prozeßlösungen die Einrichtungen 1, 2 und 3 wenigstens teilweise parallel und/oder nacheinander durchströmen kann und anschließend über einen Rücklauf 5 wieder dem Prozeßbad zugeführt wird. Die Einrichtungen 1, 2 und 3 weisen ein Zuleitung 10 für eine saure Regenerationslösung auf, sowie Zuleitungen 11, 12 und 13 für eine oxidationsmittelhaltige Lösung, eine alkalische Regenerationslösung und Spülwasser. Des weiteren weisen die Einrichtungen 1, 2 und 3 Rückläufe 10a, 11a und 12a für die entsprechenden Regenerationslösungen auf. Hierdurch kann das in den Einrichtungen 1, 2 und 3 befindliche Adsorber- und lonenaustauscherharz zur Regenerierung unabhängig voneinander mit den Regenerationslösungen und/oder der Oxidationsmittellösung in Kontakt gebracht werden und die Lösungen nach dem Kontakt mit dem Adsorberharz und/oder dem lonenaustauscherharz getrennt aufgefangen werden. Die Regenerationslösungen können somit mehrfach zur Regeneration des Adsorberharzes und/oder Ionenaustauscherharzes verwendet werden.

### Beispiel:

Ein Elektrolyt zur stromlosen Abscheidung von Nickelschichten auf Substratoberflächen wird dem Beschichtungsbad entnommen und einer erfindungsgemäßen Vorrichtung zugeführt. Die Vorrichtung weist eine mit einem Divinylbenzol/Styrolcopolymerisat Adsorberharz gefüllte Säule sowie eine mit einem sauren lonenaustauscherharz gefüllte Säule auf. Der dem Prozeßbad entnommene Nickelelektrolyt wird mittels einer Pumpe nacheinander mit dem Adsorberharz und dem Ionenaustauscherharz in Kontakt gebracht, wobei das Adsorberharz die im Nickelelektrolyten befindlichen organischen Abbauprodukte adsorbieren und das Ionenaustauscherharz die im Elektrolyten befindlichen Störionen wie z. B. Aluminiumionen aufnimmt und gegen Wasserstoffionen austauscht.

Mittels geeigneter strömungstechnischer Verschaltung lassen sich die Adsorbersäule und die lonenaustauschersäule auch parallel mit jeweils einem Teilstrom der Prozeßlösung anströmen. Dies ermöglicht auch einen Bypass der Adsorbersäule, um das Adsorberharz gegebenenfalls getrennt von dem lonenaustauscherharz regenerieren zu können.

Zur Regenerierung sind die Adsorbersäule und die lonenaustauschersäule in der zuvor beschriebenen Art mit entsprechenden Vorräten an unterschiedlichen Regenerationslösungen verbunden. Das Adsorberpolymer kann mittels der nachfolgenden Regenerierungsprozedur regeneriert werden:
1. Spülen mit Wasser
2. Regenerieren mit einer 2,5%igen H₂O₂/2,5%igen HCl-Lösung für ca. 2 Stunden
3. Regenerieren mit einer 6%igen NaOH-Lösung.

In einem letzten Schritt kann das alkalisch regenerierte Adsorberharz mit einer schwach schwefelsauren Lösung angesäuert werden, um ein Ausfallen von Nickelsalzen zu verhindern. Nach den Schritten 2. und/oder 3. können sich optional Spülschritte anschließen.

Weitere Beispiele für oberflächentechnische Beschichtungsverfahren auf die das erfindungsgemäße Verfahren und die Vorrichtung anwendbar sind, sind beispielsweise die Abscheidung einer Glanznickelschicht oder einer Halbglanznickelschicht auf Substraten wie sie aus dem Taschenbuch für Galvanotechnik, 13. Ausgabe 1988 bekannt sind oder Pulsreverseplating Kupferbäder, wie sie aus der EP 05009183 bekannt sind.

Die Erfindung ist auch anwendbar auf ein saures Zinn/Silber-Bad zur elektrolytischen Abscheidung von bleifreien Silberlegierungsschichten welches mit einer unlöslichen Anode betrieben wird. Hierbei entstehen Abbauprodukte, die entfernt werden müssen. Ein in Kombination mit Adsorberpolymeren benutzter Kationenaustauscher kann vorher und später periodisch mit Zinn beladen werden. Das saure Zinnbad eluiert Zinn vom Kationenaustauscher, welches ansonsten nachdosiert werden müßte. Durch die Elution vom Kationenaustauscher werden keine zusätzlichen, störenden Anionen eingebracht, daß heißt, die Anionenfracht wird nicht erhöht. Das Adsorberharz kann wie in den anderen Beispielen mit H₂O₂ und NaOH regeneriert werden.

Das erfindungsgemäße Verfahren lass sich auch bei den aus der EP 1 408 141 A1 bekannten Elektrolyten zur Bronzeabscheidung anwenden.

Durch die Ausgestaltung des erfindungsgemäßen Verfahrens als Mehrsäulensystem ist gewährleistet, daß das einzelnen Adsorberpolymer und das Ionenaustauscherpolymer getrennt voneinander regeneriert werden können und so hinsichtlich ihrer Adsorptions- bzw. lonenaustauscheigenschaften dem Elektrolyten über weiter Bereiche angepaßt werden können. Darüber hinaus werden durch die Anwendung des erfindungsgemäßen Verfahrens geringere Regenerationslösungsvolumina und Spülvolumina benötigt.

### Bezugszeichenliste

- 1: Adsorbersäule
- 2: Adsorbersäule
- 3: Ionenaustauschersäule
- 4: Zulauf von Prozeßbad
- 5: Rücklauf zu Prozeßbad
- 6: Bypass
- 7: Leitung
- 8: Leitung
- 9: Leitung
- 10: Zulauf saure Regenerationslösung
- 10a: Rücklauf saure Regenerationslösung
- 11: Zulauf oxidationsmittelhaltige Lösung
- 11a: Rücklauf oxidationsmittelhaltige Lösung
- 12: Zulauf alkalische Regenerationslösung
- 12a: Rücklauf alkalische Regenerationslösung
- *13*: Zulauf Wasser
- 14: Vorrichtung zur Reinigung einer Prozeßlösung

## Patentansprüche

1. Verfahren zur Reinigung einer in der Oberflächentechnik einsetzbaren Prozeßlösung, wobei die Prozesslösung ein Elektrolyt zur galvanischen oder autokatalytischen Abscheidung einer Metallschicht auf einem Substrat ist, mittels eines Polymerharzes, das geeignet ist, Verunreinigungen aus der Prozesslösung zu adsorbieren und dabei die Verunreinigungen aus der Prozesslösung zu adsorbieren und dabei die Verunreinigungen zumindest teilweise aus der Prozesslösung zu entfernen,
**dadurch gekennzeichnet,**
**dass** die Prozesslösung nacheinander mit wenigstens einem ersten und einem zweiten Polymerharz in Kontakt gebracht wird oder jeweils Teilströme der Prozeslösung parallel mit wenigstens einem ersten und einem zweiten Polymerharz in Kontakt gebracht werden, wobei das erste und das zweite Polymerharz in voneinander getrennten Aufnahmeeinrichtungen angeordnet sind,
**dass** das erste Polymerharz und das zweite Polymerharz sich hinsichtlich ihrer physiko-chemischen Eigenschaften unterscheiden,
und **dass** mit dem ersten Polymerharz organische Verunreinigungen aus dem Prozessbad zumindest teilweise entfernt werden, wobei das erste Polymerharz aus der Gruppe bestehend aus Polyacrylate, Polystyrol, Polyacrylamid und Divinylbenzol/Styrol Copolymerisate ausgewählt wird,
und **dass** mit dem zweiten Polymerharz anorganische Verunreinigungen zumindest teilweise aus der Prozesslösung entfernt werden, wobei das zweite Polymerharz ein lonenaustauscherharz ist
**und dass** das erste Polymerharz mittels einer ersten Regenerationslösung regeneriert wird und das zweite Polymerharz mittels einer unterschiedlichen zweiten Regenerationslösung regeneriert wird,
und **dass** das erste Polymerharz und das zweite Polymerharz jeweils zur Regenerierung unabhängig voneinander mit der ersten Regenerationslösung oder mit der zweiten Regenerationslösung in Kontakt gebracht werden,
und **dass** es einen bypass um das erste Polymerharz gibt, um das erste Polymerharz getrennt von dem zweiten Polymerharz regenerieren zu können.

2. Verfahren gemäß Ansprüch 1, **dadurch gekennzeichnet, dass** wenigstens das lonenaustauscherharz vor der Kontaktierung mit der Prozesslösung mit einer in der Prozesslösung enthaltenen Substanz beladen wird, welche bei der Kontaktierung der Prozesslösung mit dem lonenaustauscherharz zumindest teilweise an die Prozesslösung abgegeben wird.

3. Verfahren gemäß einem der vorhergehenden Ansprüche, **dadurch gekennzeichnet, dass** die Prozeßlösung kontinuierlich mittels des Verfahrens gereinigt wird.

4. Verfahren gemäß einem der vorhergehenden Ansprüche, **dadurch gekennzeichnet, dass** das Verfahren mit wenigstens einem weiteren Verfahren zur Reinigung von Prozesslösungen kombiniert wird.

## Claims

1. Method for purifying a process solution that can be used in surface technology, the process solution being an electrolyte for galvanically or autocatalytically depositing a metal layer on a substrate, by means of a polymer resin which is suitable for adsorbing impurities from the process solution and thereby adsorbing the impurities from the process solution and thereby at least partially removing the impurities from the process solution,
**characterized in that**
the process solution is successively brought into contact with at least one first and one second polymer resin, or in each case partial streams of the process solution are brought into contact with at least one first and one second polymer resin in parallel, the first and the second polymer resin being arranged in receiving devices which are separate from one another,
**in that** the first polymer resin and the second polymer resin have different physicochemical properties,
**and in that** organic impurities are at least partially removed from the process bath by means of the first polymer resin, the first polymer resin being selected from the group consisting of polyacrylates, polystyrene, polyacrylamide and divinylbenzene/styrene copolymers,
**and in that** inorganic impurities are at least partially removed from the process solution by means of the second polymer resin, the second polymer resin being an ion exchange resin
**and in that** the first polymer resin is regenerated by means of a first regeneration solution and the second polymer resin is regenerated by means of a different second regeneration solution,
**and in that** the first polymer resin and the second polymer resin are each independently brought into contact with the first regeneration solution or with the second regeneration solution for regeneration,
**and in that** there is a bypass around the first polymer resin in order to be able to regenerate the first polymer resin separately from the second polymer resin,

2. Method according to claim 1, **characterized in that** at least the ion exchange resin is loaded with a substance contained in the process solution before contact with the process solution, which substance is at least partially released to the process solution when the process solution comes into contact with the ion exchange resin.

3. Method according to any of the preceding claims, **characterized in that** the process solution is continuously purified by means of the method.

4. Method according to any of the preceding claims, **characterized in that** the method is combined with at least one further method for purifying process solutions.

## Revendications

1. Procédé permettant le nettoyage d'une solution de traitement utilisable dans la technique des surfaces, dans lequel la solution de traitement est un électrolyte pour le dépôt galvanique ou autocatalytique d'une couche métallique sur un substrat, au moyen d'une résine polymère qui est apte à adsorber des impuretés de la solution de traitement et à ainsi adsorber les impuretés de la solution de traitement et à ainsi éliminer au moins partiellement les impuretés de la solution de traitement,
**caractérisé en ce**
**que** la solution de traitement est mise en contact successivement avec au moins une première et une seconde résine polymère ou respectivement des courants partiels de la solution de traitement sont mis en contact parallèlement avec au moins une première et une seconde résine polymère, dans lequel la première et la seconde résine polymère sont disposées dans des dispositifs de réception séparés l'un de l'autre,
**que** la première résine polymère et la seconde résine polymère diffèrent en ce qui concerne leurs propriétés physicochimiques,
**et que**, avec la première résine polymère, des impuretés organiques sont au moins partiellement éliminées du bain de traitement, dans lequel la première résine polymère est choisie dans le groupe constitué de polyacrylates, polystyrène, polyacrylamide et copolymères divinylbenzène/styrène,
**et que**, avec la seconde résine polymère, des impuretés inorganiques sont au moins partiellement éliminées de la solution de traitement, dans lequel la seconde résine polymère est une résine échangeuse d'ions
**et que** la première résine polymère est régénérée au moyen d'une première solution de régénération et la seconde résine polymère est régénérée au moyen d'une seconde solution de régénération différente,
**et que** la première résine polymère et la seconde résine polymère sont respectivement mises en contact pour la régénération, indépendamment l'une de l'autre, avec la première solution de régénération ou avec la seconde solution de régénération,
**et qu'**une dérivation autour de la première résine polymère existe afin de pouvoir régénérer la première résine polymère séparément de la seconde résine polymère,

2. Procédé selon la revendication 1, **caractérisé en ce qu'**au moins la résine échangeuse d'ions est chargée, avant la mise en contact avec la solution de traitement, avec une substance contenue dans la solution de traitement, laquelle substance est au moins partiellement transmise à la solution de traitement lors de la mise en contact de la solution de traitement avec la résine échangeuse d'ions.

3. Procédé selon l'une des revendications précédentes,
**caractérisé en ce que** la solution de traitement est purifiée en continu au moyen du procédé.

4. Procédé selon l'une des revendications précédentes,
**caractérisé en ce que** le procédé est combiné avec au moins un autre procédé permettant la purification de solutions de traitement.
